# EUROPEAN PATENT APPLICATION

(11) **EP 2 000 190 A2**
(43) Date of publication of application: **10.12.2008**
(21) Application number: 07739450.0
(22) Date of filing: 23.03.2007
(51) Int. Cl.: A63F 13/12, A63F 13/00

(54) **GAME SYSTEM, GAME CONTROL METHOD, INFORMATION RECORDING MEDIUM, AND PROGRAM**

(30) Priority: 27.03.2006 JP 2006085024
(71) Applicant: Konami Digital Entertainment Co., Ltd., Tokyo 107-8324 (JP)
(72) Inventor: MORI, Shoji, Minato-ku Tokyo 1078324 (JP)
(74) Representative: Rüger, Barthelt & Abel Patentanwälte
(86) International application number: PCT/JP2007/056009
(87) International publication number: WO 2007/111247

(57) **Abstract**

In order to cause players to feel as little communication delay as possible in a communication type match-up game, a task generating terminal records how a player dances (301) to a reproduction (300) of a music, generates a task (303) based on an input operation (302), and transmits (304) the task to a task receiving terminal. The task receiving terminal reproduces (306) a motion picture of how the opponent player dances (301) to a reproduction (305) of the music, presents (307) the task (303), and transmits a motion picture of how a player dances to the reproduction (301) of the music. The task generating terminal reproduces (313) how the opponent player dances (308) to the reproduction (311) of the music, presents (313) the task (303), and determines (315) a score based on an input operation (309, 314) for the presentation (307, 313) of the task.

## Description

### Technical Field

The present invention relates to a game system and a game control method which are suitable for allowing a player to feel as little communication delay as possible in a communication type match-up game where a winner is determined based on motion information of the player, a computer-readable information recording medium recording a program which realizes those system and method with a computer, and the program.

### Background Art

Conventionally, various kinds of communication type match-up game systems over a communication network like the Internet, and game systems which belong to a category called a rhythm game are provided. For example, the following literatures disclose technologies related to such game systems.
Patent Literature 1: Japanese Patent No. 3424821
Patent Literature 2: Japanese Patent No. 3245147
Non-Patent Literature 1: Kabushiki Kaisha Shinseisha, Dance Dance Revolution 2nd MIX, GAMEST, 1999 Nen 3.15 Go, 15 March, 1999 (15.03.99), Vol.14, No.10, page 104
Non-Patent Literature 2: Konami Co., Ltd., Dance Dance Revolution 2nd MIX Perfect Guide, first edition, 20 June, 1999 (20.06.99), first edition, pages 208 to 209
Non-Patent Literature 3: Konami Co., Ltd., KONAMI OFFICIAL GUIDE Perfect Series Dance Dance Revolution 2nd ReMIX Perfect Guide, first edition, 01 October, 1999 (01.10.99), first edition, page 26

Here, [patent literature 1] discloses a game system which is a network game system and displays a message character string on each game terminal at an appropriate display time.
On the other hand, [patent literature 2] discloses a dance game system which displays a motion instruction informing to which position of a step-on board must be stepped on while outputting a music, and determines whether or not a player was able to dance to the rhythm based on whether or not the player stepped on the step-on board in accordance with the motion instruction.
In a case where players play a dance game match-up at a gaming arcade, a player can dance to the rhythm together with an opponent while watching the motion thereof, and this gives the match-up game a live feeling and a feeling of immediacy.

Further, [non-patent literature 1], [non-patent literature 2] and [non-patent literature 3] disclose that the following procedures are employed when a dance game match-up is carried out using a task made by a player himself/herself.

That is, two players A, B use two respective step-on boards connected to the same game device. The players dance to a music M output from the game device with their own moves on the step-on boards.

Then, a task X is generated based on the moves of the player A, and a task Y is generated based on the moves of the player B.

Next, the music M is output again, and at this time, the task X generated based on the moves of the player A is provided to the player A, and the task Y generated based on the moves of the player B is provided to the player B.

Subsequently, the music M is output again, and at this time, the task Y generated based on the moves of the player B is provided to the player A, and the task X generated based on the moves of the player A is provided to the player B. This routine may be repeated one more time.

Therefore, although the same music is provided to the players A, B, the moves thereof become different for each player.

### Disclosure of Invention

### Problem to be Solved by the Invention

If a rhythm game such as a dance game is realized in the form of a communication type match-up, however, a communication delay always occurs, and it is physically possible for a player to play while watching the motion of an opponent player. Accordingly, a technology which allows a player to feel as little process delay as possible in a communication type match-up game is strongly sought.

Moreover, in the method of generating a task based on the motion of a player, there is a strong demand for setting in which as far as possible the players accomplish the same task to take the same motion, to thereby improve the feeling of tension of the match-up.

The present invention solves the foregoing problems, and it is an object of the invention to provide a game system and a game control method which are suitable for allowing a player to feel as little communication delay as possible in a communication type match-up game where a winner is determined based on motion information of the player, a computer-readable information recording medium recording a program which realizes those system and method with a computer, and the program.

### Means for Solving the Problem

To achieve the above described object, the following invention is disclosed on the basis of the principle of the invention.

A game system according to a first aspect of the invention is a game system which comprises a first game terminal device and a second game terminal device both connected together over a computer communication network, and either one of the first and second game terminal devices functions as a task generating terminal while the other game terminal device functions as a task receiving terminal.
Each of the first game terminal device and the second game terminal device comprises a task multimedia reproducing unit, a task motion recording unit, a task generating unit, a task transmitting unit, a task receiving unit, a reception-side task presenting unit, a reception-side response motion recording unit, a response transmitting unit, a response receiving unit, a generation-side task presenting unit, a generation-side response motion recording unit, and a score determining unit, and is structured as follows.

When the game terminal device is the task generating terminal, the task multimedia reproducing unit reproduces task multimedia information.
The task multimedia information corresponds to a music/musical composition of conventional dance games, and in the game system, players of both game terminal devices are required to dance and perform input operation to the rhythm of the music.

On the other hand, the task motion recording unit records motion information (hereinafter, "task motion information") of a player during a period that the task multimedia information is being reproduced.
For example, in a case where the present invention is applied to a dance game, motion information of a player typically includes a motion picture information of how the player dances captured by a CCD camera, and operation input information showing steps taken by the player in chronological order.

The task generating unit generates a motion task that a player should accomplish from the recorded task motion information.
According to the conventional dance games, positions of steps in a dance are generally prepared as motion tasks by the provider of the game system, but according to the embodiment, a motion task is newly generated from the task motion information when a player dances.

The task transmitting unit transmits the recorded task motion information and the generated motion task to the task receiving terminal via the computer communication network.
In the case of a dance game, motion picture information representing how a player of the task generating terminal dances alone and a motion task generated by that dance are transmitted to the opponent player, and the opponent player is required to accomplish the motion task.

On the other hand, when the game terminal device is the task receiving terminal, the task receiving unit receives the task motion information and the motion task both transmitted from the task generating terminal via the computer communication network.
As mentioned above, in the case of the dance game, a motion task generated by the task generating terminal and motion picture information representing how the opponent dances are received.

On the other hand, the reception-side task presenting unit reproduces the task multimedia information, and presents the received task motion information and motion task in synchronization with the reproduction.
In the case of the foregoing example, the same music as that of the opponent player is output as a BGM, and the motion picture representing how the opponent player dances is reproduced with the music, and a motion task indicating which step should be taken at which timing is displayed on a screen with the BGM. The motion task is generated based on how the opponent player dances.

Accordingly, the player of the task receiving terminal can dance to the music and the motion task while watching how the player of the task generating terminal dances to the music.

The reception-side response motion recording unit records motion information (hereinafter, "reception-side response motion information") of a player during a period that the motion task is being presented.
In the same manner that the way the player of the task generating terminal dances is recorded, the way the player of the task receiving terminal dances is also recorded. Thus, the symmetrical property of the game is ensured.

The response transmitting unit transmits the recorded reception-side response motion information via the computer communication network.
The player of the task receiving terminal is able to dance to accomplish the motion task while watching how the opponent player dances. Accordingly, in order to provide similar information to the player of the task receiving terminal, the reception-side response motion information is transmitted to the task generating terminal.

On the other hand, when the game terminal device is the task generating terminal, the response receiving unit receives the reception-side response motion information transmitted from the task receiving terminal via the computer communication network.
This is a similar process to that of the task receiving terminal, but because the motion task generated by the task generating terminal is used, motion picture information of how the player of the task receiving terminal dances is received in the case of the foregoing dance game.

The generation-side task presenting unit reproduces the task multimedia information, and presents the received reception-side response motion information and the generated motion task in synchronization with the reproduction.
In the case of the foregoing dance game, the player of the task generating terminal is required to dance with steps to a BGM which is the same music as that when the player danced previously while watching how the opponent player dances, and at this time, steps of the previous dance of the local player are presented as the motion task.

That is, it is required to dance as far as possible with the same choreography as that of the previous dance. This prevents any cheating, such as dancing with a chaotic choreography just to embarrass the opponent player, and the purpose of the game becomes to dance the same dance accurately as far as possible. This strongly motivates the players.

The generation-side response motion recording unit records motion information (hereinafter, "generation-side response motion information") of a player during a period that the motion task is being presented.
Regarding the motion information recorded at this stage, it is not necessary to capture the motion picture of how the player dances, but the way both players dance may be displayed on the screen simultaneously. In the case of the foregoing dance game, however, in order to score the players to determine which one of the players is a winner, it is necessary to record operation input information indicating steps taken by the player in chronological order.

In either one of the task generating terminal and the task receiving terminal, a score determining unit compares the generated motion task with the recorded generation-side response motion information and with the received reception-side response motion information, and determines the score of the player of the task generating terminal and that of the player of the task receiving terminal.

Because the generated motion task is shared by both game terminal devices, if information indicating steps in the generation-side response motion information and in the reception-side response motion information in chronological order are transmitted to the opponent terminal device in accordance with necessity, either one of the game terminal devices or both game terminal devices can determine a score.

For example, both game terminal devices may determine a score simultaneously, and the result thereof may be exchanged appropriately to compare the scores with each other, or either one of the game terminal devices may determine scores, and transmit the determination result to the opponent terminal device.

According to the present invention, in a communication type match-up game, each player can move while watching how the opponent player moves, so that it is possible to provide a game system which allows the players not to feel a communication delay but to feel as if both players are really having a match-up at the same place in reality.

The game system of the present invention can be structured in such a way that every time the task motion recording unit records the task motion information, the task generating unit generates a motion task based on the recorded task motion information, every time the motion task is generated, transmission by the task transmitting unit is carried out, the task motion information and the motion task both received by the task receiving unit are subjected to buffering, and after the amount of buffering exceeds a predetermined amount, presentation by the reception-side task presenting unit is started, and every time the reception-side response motion recording unit records the reception-side response motion information, transmission by the response transmitting unit is carried out, and the reception-side response motion information received by the response receiving unit is subjected to buffering, and after the amount of buffering exceeds a predetermined amount, presentation by the generation-side task presenting unit is started.

In particular, recording by the task motion recording unit, generation by the task generating unit, and transmission by the task transmitting unit are carried out concurrently, reception by the task receiving unit, presentation by the reception-side task presenting unit, recording by the reception-side response motion recording unit, and transmission by the response transmitting unit are carried out concurrently, and reception by the response receiving unit, presentation by the generation-side task presenting unit, and recording by the generation-side response motion recording unit are carried out concurrently.

For example, in the case of the dance game, the way a player dances is recorded and transmitted to the opponent player in a streaming manner, and concurrently, what steps are taken is detected at a predetermined timing, a task is generated and then transmitted to the opponent player in a streaming manner.

For streaming transmission/reception, buffering is performed, and after the amount of buffering reaches a predetermined level, presentation of a task is started.

According to the this invention, recording of the motion information of a player, generation of a task, and transmission of various kinds of information are carried out like pipeline processing, so that both game terminal devices can allow the respective players to play a game with a waiting time which is as short as possible.

The game system of the present invention can be structured in such a way that the first game terminal device and the second game terminal device alternately repeat a mode where the first game terminal device functions as the task generating terminal and the second game terminal device functions as the task receiving terminal and a mode where the first game terminal device functions as the task receiving terminal and the second game terminal device functions as the task generating terminal for a predetermined number of times, and determine which one of the player of the first game terminal device and the player of the second game terminal device is a winner.
The present invention relates to a preferred embodiment of the invention, and by executing the two modes alternately, the symmetrical property of the game is maintained and the fairness of the game is ensured.
According to the present invention, it is possible to provide a communication type match-up game which allows respective players of two game terminal devices to generate tasks with each other and to compete the accomplishment of the tasks to thereby ensure fairness and retain a feeling of tension in the game.

The game system of the present invention can be structured in such a way that the task multimedia information is sound information, motion information of the players recorded by the first game terminal device and the second game terminal device include a motion picture information which pick up an image of the player and operation information of a controller by that player, the task generating unit sets operation information of the controller by the player at a timing allocated to the sound information as a motion task, the reception-side task presenting unit reproduces the motion picture information included in the task motion information in synchronization with the task multimedia information, the generation-side task presenting unit reproduces the motion picture information included in the reception-side response motion information in synchronization with the task multimedia information, and the score determining unit determines a score based on a level of how much operation information of the controller included in the generation-side response motion information and operation information of the controller included in the reception-side response motion information match the motion task.
The present invention relates to the preferred embodiment of the invention, and in an embodiment where a dance game is realized, the way of stepping is acquired through an exclusive controller. At this time, conventional controllers of a dance game can be reused.

Therefore, according to the present invention, it is possible to provide a new communication type match-up game system while making effective use of a conventional hardware resource.

A game control method according to another aspect of the invention is executed by a task generating terminal and a task receiving terminal both connected together over a computer communication network. The task generating terminal comprises a task multimedia reproducing unit, a task motion recording unit, a task generating unit, a task transmitting unit, a response receiving unit, a generation-side task presenting unit, and a generation-side response motion recording unit. The task receiving terminal comprises a task receiving unit, a reception-side task presenting unit, a reception-side response motion recording unit, and a response transmitting unit. Either one of the task generating terminal and the task receiving terminal has a score determining unit. The method comprises a task multimedia reproducing step, a task motion recording step, a task generating step, a task transmitting step, a response receiving step, a generation-side task presenting step, a generation-side response motion recording step, a task receiving step, a reception-side task presenting step, a receiving-side response motion recording step, a response transmitting step, and a score determining step, and is structured as follows.

First, for the task generating terminal, in the task multimedia reproducing step, the task multimedia reproducing unit reproduces task multimedia information, in the task motion recording step, the task motion recording unit records motion information (hereinafter, "task motion information") of a player during a period that the task multimedia information is being reproduced. In the task generating step, the task generating unit generates a motion task that a player should accomplish from the recorded task motion information, and in the task transmitting step, the task transmitting unit transmits the recorded task motion information and the generated motion task to the task receiving terminal via the computer communication network.

On the other hand, for the task receiving terminal, in the task receiving step, the task receiving unit receives the task motion information and the motion task both transmitted from the task generating terminal via the computer communication network, and in the reception-side task presenting step, the reception-side task presenting unit reproduces the task multimedia information, and presents the received task motion information and motion task in synchronization with the reproduction. In the reception-side response motion recording step, the reception-side response motion recording unit records motion information (hereinafter, "reception-side response motion information") of the player during the period that the motion task is being presented, and in the response transmitting step, the response transmitting unit transmits the recorded reception-side response motion information via the computer communication network.

Further, for the task generating terminal, in the response receiving step, the response receiving unit receives the reception-side response motion information transmitted from the task receiving terminal via the computer communication network, and in the generation-side task presenting step, the generation-side task presenting unit reproduces the task multimedia information, and presents the received reception-side response motion information and the generated motion task in synchronization with the reproduction. In the generation-side response motion recording step, the generation-side response motion recording unit records motion information (hereinafter, "generation-side response motion information") of the player during a period that the motion task is being presented.

For at least either one of the task generating terminal and the task receiving terminal, in the score determining step, the score determining unit compares the generated motion task with the recorded generation-side response motion information and with the received reception-side response motion information, and determines a score of the player of the task generating terminal and a score of the player of the task receiving terminal.

A program according to the other aspect of the invention allows a computer to function as individual units of the game terminal device of the foregoing game system, and allows the computer to execute the foregoing game control method.

The program of the present invention can be recorded in a computer-readable information recording medium, such as a compact disk, a flexible disk, a hard disk drive, a magneto optical disk, a digital video disk, a magnetic tape, or a semiconductor memory.

The foregoing program can be distributed and sold over a computer communication network independently from a computer which runs the program. Moreover, the foregoing information recording medium can be distributed and sold independently from the computer.

### Effect of the Invention

According to the invention, there are provided a game system and a game control method which are suitable for allowing a player to feel as little communication delay as possible in a communication type match-up game where a winner is determined based on motion information of the player, a computer-readable information recording medium recording a program which realizes those system and method with a computer, and the program.

### Brief Description of Drawings

FIG. 1 is a schematic diagram showing the general structure of a typical information processing device which functions as a game terminal device of the invention by executing a program;
FIG. 2 is a schematic diagram showing the general structure of a game system according to the embodiment of the invention;
FIG. 3 is a sequence diagram showing a time series between a communication and a process in the game system of the embodiment of the invention;
FIG. 4 is a schematic diagram showing the structure of the game system of the embodiment in detail; and
FIG. 5 is an explanatory diagram showing how a screen is displayed on a task generating terminal and a task receiving terminal according to the embodiment.

### Description of Reference Numerals

- 100: information processing device
- 101: CPU
- 102: ROM
- 103: RAM
- 104: interface
- 105: controller
- 106: external memory
- 107: image processor
- 108: DVD-ROM drive
- 109: NIC
- 110: sound processor
- 111: microphone
- 201: game system
- 202: game terminal device
- 203: internet
- 401: task generating terminal
- 402: task multimedia reproducing unit
- 403: task motion recording unit
- 405: task generating unit
- 406: task transmitting unit
- 407: response receiving unit
- 408: generation-side task presenting unit
- 409: generation-side response motion recording unit
- 451: task receiving terminal
- 452: task receiving unit
- 453: reception-side task presenting unit
- 454: reception-side response motion recording unit
- 455: response transmitting unit
- 491: score determining unit
- 501: screen
- 505: horizontal line
- 506: aiming bar
- 507: footstep mark
- 508: circle mark
- 509: cross mark
- 511: generation-side player display area
- 512: generation-side task display area
- 521: reception-side player display area
- 522: reception-side task display area

### Best Mode for Carrying Out the Invention

An embodiment of the present invention will be described below. While the following describes an embodiment in which the present invention is adapted to a game information processing device for the ease of understanding, the embodiment to be described below is given by way of illustration only, and does not limit the scope of the invention. Therefore, those skilled in the art can employ embodiments in which the individual elements or all the elements are replaced with equivalent ones, and which are also encompassed in the scope of the invention.

### First Embodiment

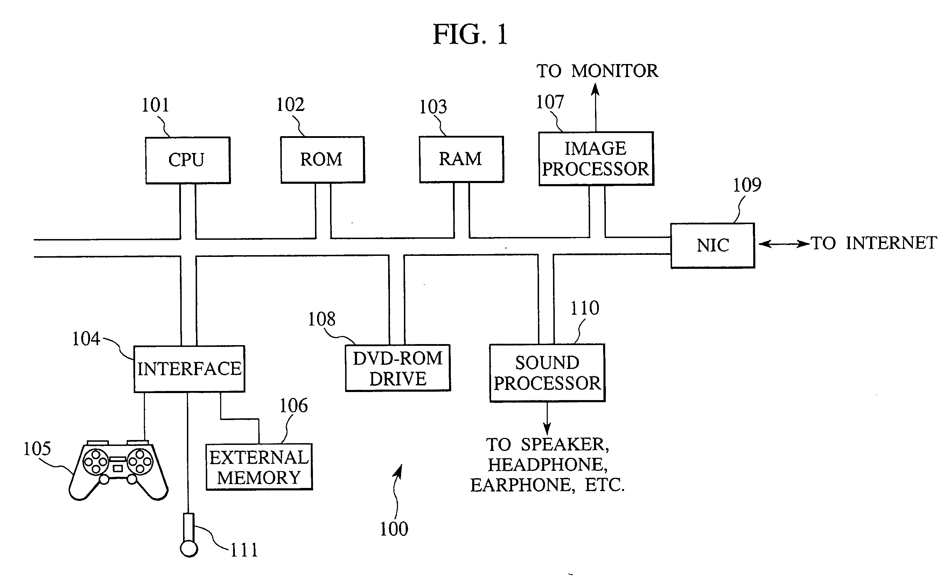

FIG. 1 is a schematic diagram illustrating the general structure of a typical information processing device that functions as a game terminal device in a game system of the present invention by executing a program. A description will be given hereinbelow referring to these diagrams.

An information processing device 100 comprises a CPU (Central Processing Unit) 101, a ROM 102, a RAM (Random Access Memory) 103, an interface 104, a controller 105, an external memory 106, an image processor 107, a DVD-ROM (Digital Versatile Disc ROM) drive 108, an NIC (Network Interface Card) 109, a sound processor 110, and a microphone 111.

As a DVD-ROM storing a program and data for a game is loaded into the DVD-ROM drive 108 and the information processing device 100 is powered on, the program is executed to realize the game device of this embodiment.

The CPU 101 controls the general operation of the information processing device 100, and is connected to individual components to exchange a control signal and data therewith. Further, by using an ALU (Arithmetic Logic Unit) (not shown), the CPU 101 can perform arithmetic operations such as addition, subtraction, multiplication, division, etc., logical operations such as logical addition, logical multiplication, logical negation, etc., bit operations such as bit addition, bit multiplication, bit inversion, bit shift, bit rotation, etc., on a storage area, or a register (not shown) which can be accessed at a high speed. Furthermore, the CPU 101 itself may be designed to be able to rapidly perform saturate operations such as addition, subtraction, multiplication, division, etc., for handling multimedia processes, vector operations such as trigonometric function, etc., or may realize these with a coprocessor.

An IPL (Initial Program Loader) which is executed immediately after power-on is recorded in the ROM 102. As the IPL is executed, the program recorded in the DVD-ROM is read into the RAM 103 and is executed by the CPU 101. Further, the ROM 102 stores a program and various data for an operating system necessary for controlling the overall operation of the information processing device 100.

The RAM 103 is for temporarily storing data and programs, and retains the program and data read from the DVD-ROM, and other data needed for progressing a game and chat communication. Further, the CPU 101 performs processes such as securing a variable area in the RAM 103 to work the ALU directly upon the value stored in the variable to perform operations, or once storing the value stored in the RAM 103 in the register, performing operations on the register, and writing back the operation result to the memory, etc.

The controller 105 connected via the interface 104 receives an operation input which is made when a user plays a game.

The external memory 106 detachably connected via the interface 104 rewritably stores data indicating the play status (past performance, etc.) of a game, etc., data indicating the progress status of the game, data of chat communication logs (records) in the case of a network match-up, etc. As the user makes an instruction input via the controller 105, these data can adequately be recorded in the external memory 106.

In addition, the controller 105 may be in the form of a step-on board. Such a step-on type board controller is formed in a planar shape, is put on a floor, and the player steps on the controller. A pressure sensor or a distortion gauge prepared at each part of the planar controller detects a position stepped on by the player, and notifies the CPU 101 that the portion is stepped on via the interface 104. Accordingly, the step of the dance of the player can be received as an instruction input.

The program for realizing the game and the image data and sound data accompanying the game are recorded in the DVD-ROM to be loaded into the DVD-ROM drive 108. Under the control of the CPU 101, the DVD-ROM drive 108 performs a process of reading from the DVD-ROM loaded therein to read a necessary program and data, and these are temporarily stored in the RAM 103 or the like.

The image processor 107 processes data read from the DVD-ROM by means of the CPU 101 and an image operation processor (not shown) the image processor 107 has, and then records the data in a frame memory (not shown) in the image processor 107. The image information recorded in the frame memory is converted to a video signal at a predetermined synchronous timing, which is in turn output to a monitor (not shown) connected to the image processor 107. Thereby, image displays of various types are available.

The image operation processor can enable fast execution of an overlay operation of a two-dimensional image, a transparent operation like α blending, and various kinds of saturate operations.

It is also possible to enable fast execution of an operation of rendering polygon information which is arranged in virtual three-dimensional space and to which various kinds of texture information are added, by a Z buffer scheme to acquire a rendered image with a downward view of a polygon toward a predetermined view point position, arranged in the virtual three-dimensional space, from the predetermined view point position.

Further, the CPU 101 and the image operation processor cooperate to be able to write a string of characters as a two-dimensional image in the frame memory or on each polygon surface according to font information which defines the shapes of characters.

The NIC 109 serves to connect the information processing device 100 to a computer communication network (not shown), such as the Internet or the like. Such an NIC 109 is pursuant to the 10 BASE-T/100 BASE-T standard which is to be used at the time of constructing a LAN (Local Area Network) for example, or it is comprised of such as an analog modem for connecting to the Internet using a telephone circuit, an ISDN (Integrated Services Digital Network) modem, an ADSL modem (Asymmetric Digital Subscriber Line) modem, a cable modem for connecting to the Internet using a cable television circuit, or the like, and of an interface (not shown) which intervenes between the CPU 101 and any one of such modems.

The sound processor 110 converts sound data read from the DVD-ROM to an analog sound signal, and outputs the sound signal from a speaker (not shown) connected thereto. Under the control of the CPU 101, the sound processor 110 generates sound effects and music data to be generated during progress of the game, and outputs sounds corresponding thereto from a speaker.

In a case where the sound data recorded on the DVD-ROM is MIDI data, the sound processor 110 refers to the sound source data included in the data, and converts the MIDI data to PCM data. Further, in a case where the sound data is compressed sound data of ADPCM format or Ogg Vorbis format, etc., the sound processor 110 expands the data, converting it to PCM data. The PCM data is D/A (Digital/Analog) converted at a timing corresponding to the sampling frequency of the data and output to the speaker, thereby enabling sound output.

Further, the information processing device 100 can be connected with the microphone 111 through the interface 104. In this case, A/D conversion is performed on an analog signal from the microphone 111 at an appropriate sampling frequency, so that the sound processor 110 can perform a process like mixing on a digital signal in the PCM format.

In a case where a CCD camera (not shown) is connected to the interface 104, the motion of a player can be picked up as a motion picture. Motion picture information acquired by the CCD camera can be reproduced by a television device through the image processor 107, and can be transmitted to another information processing device 100 as streaming data through the NIC 109 so as to be reproduced by another information processing device 100.

In addition, the information processing device 100 may be configured to achieve the same functions as the ROM 102, the RAM 103, the external memory 106, and the DVD-ROM or the like which is to be loaded into the DVD-ROM drive 108 by using a large-capacity external storage device, such as a hard disk.

The above-explained information processing device 100 corresponds to a so-called "television game device for consumers", but a hardware which realizes a game communicating through a communication network with another hardware device can embody the present invention. Accordingly, various computing machines, such as a cellular phone device, a portable game device, a KARAOKE device, and a general business computer can embody the present invention.

For example, like the foregoing information processing device 100, a general computer comprises a CPU, a RAM, a ROM, a DVD-drive, and an NIC, further has an image processor having a simpler function than that of the information processing device 100, has a hard disk drive as an external storing device, and can use a flexible disk, magneto optical disk, a magnetic tape, or the like. A keyboard and a mouse are used as input devices instead of the controller 105.

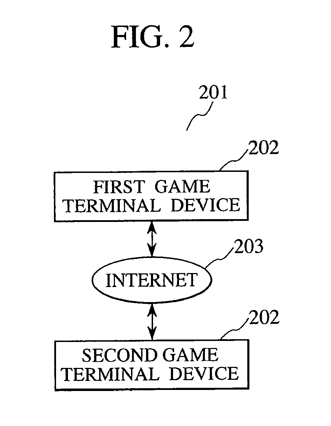

FIG. 2 is a schematic diagram showing the general structure of a game system according to the embodiment of the invention. Hereinafter, an explanation will be given with reference to this figure.

A game system 201 employs a structure that two game terminal devices 202 are connected together via the Internet 203 so as to communicate with each other. Regarding the two game terminal devices 202, one functions as a task generating terminal and the other functions as a task receiving terminal at a certain time, but the functions thereof are reversed at a next time.

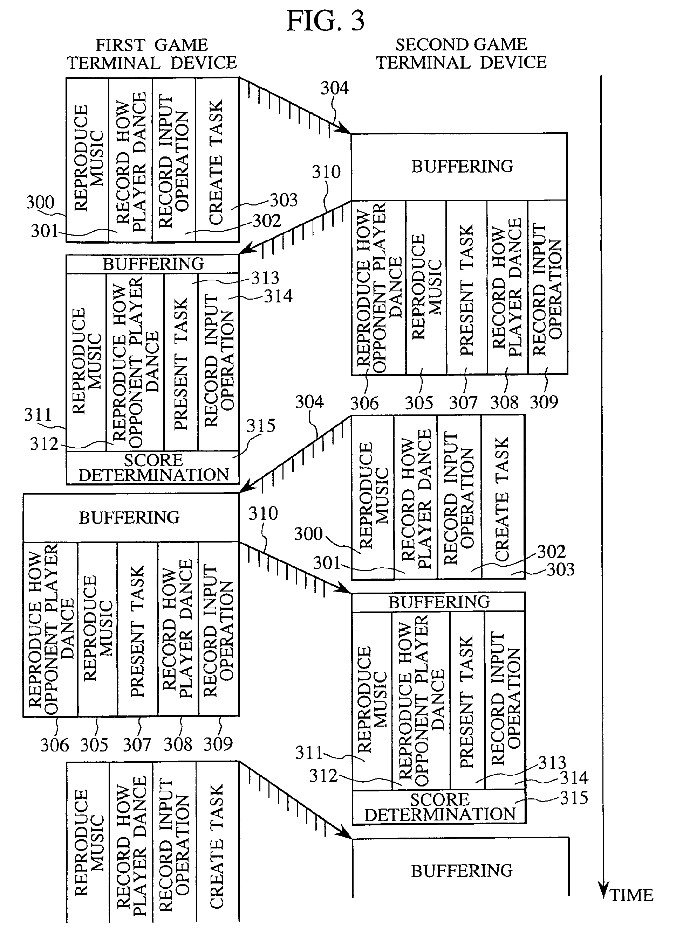

FIG. 3 is a sequence diagram showing a time series between a communication and a process in the game system of this embodiment of the invention. Hereinafter, an explanation will be given with reference to this figure.

A game starts with a mode where a first game terminal device 202 functions as a task generating terminal, and a second game terminal device 202 functions as a task receiving terminal.

The task generating terminal device plays a dance music as task multimedia information for a certain time (300). A player dances to the music, and how the player dances is recorded (301). Input operations to the step-on type board controller when the player dances are recorded (302), and a task is generated based on the steps (303). Thereafter, record information (301) and a generated task (303) are successively subjected to streaming transmission to the task receiving terminal device (304).

The task receiving terminal device receives the record information and the task having undergone streaming transmission (304), and plays the same dance music after an appropriate amount of buffering is performed (305), reproduces the received record information (306), presents the received task (307), records how another player dances (308), and records input operations to a step-on type board controller (309).

Record information (308) and recorded input operations (309) are successively subjected to streaming transmission to the task generating terminal (310).

The task generating terminal receives the record information and the input operations after an appropriate amount of buffering is performed (310), plays the same dance music (311), reproduces the received record information (312), presents the generated task (313), and records input operations to the step-on type board controller (314).

The generated task (303) and the input operations (314) are compared to determine the score of the player of the task generating terminal. On the other hand, the generated task (303) and the received input operations (309) are compared to determine the score of the player of the task receiving terminal (315).

A comparison between the task (303) and the received input operations (309) can be performed on the task receiving terminal side, and if the input operations (314) are transmitted from the task generating terminal to the task receiving terminal, the task receiving terminal can compare the task (303) with the input operations (314) to determine the score of the player of the task generating terminal. Further, each terminal may determine the score of the player, and may transmit a determination result to the partner terminal.

This is the end of a half unit of the game, and after that, the first game terminal device 202 functions as the task receiving terminal and the second game terminal device 202 functions as the task generating terminal, and the same process is executed, thereby completing a unit of the game. That is, the game employs a batting/fielding type inning system like a baseball game, a unit of the game corresponding to an inning.

In the second game terminal device 202, after the player dances (308), as shown in the figure, the second game terminal device can be changed over to the task generating terminal without any interval, so that the player can be allowed to do a next dance (301). This time can be overlapped with a time when a first-bat player dances for a task generated by himself/herself in the first game terminal device 202, thereby reducing a waiting time as much as possible. Note that in the figure, to facilitate understanding, a time which can be overlapped is shown as a short time, but a time length for each process can be changed arbitrarily, so that a user can be caused not to actually feel a waiting time shown in the figure.

Here, as explained above, recording by a task motion recording unit 403, generation by a task generating unit 405, and transmission by a task transmitting unit 406 are carried out concurrently.

By executing such processes:
(a) steps to be stepped by players in a dance game are presented by players, and a player accomplishes a presented task by himself/herself, so that spontaneous and appropriate task generation can be expected;
(b) how an opponent player dances is subjected to streaming transmission, and is reproduced in synchronization with a time when a player dances to accomplish a task given to that player, so that the player can have a strong feeling that the player is in competition; and
(c) a match-up which does not cause a player to feel a communication delay is realized even though the match-up progresses with a communication.

According to the technologies disclosed in [Non-Patent Literature 1], [Non-Patent Literature 2] and [Non-Patent Literature 3], players must play with two step-on boards connected to the same game device, and as explained above, when a task is presented and accomplished, the players must play different dances even though the same music is played.

On the other hand, as explained in (b), according to this embodiment, the two players play the same dance for the same music. According to this embodiment, the players greatly feel that they are in competition, and from this standpoint, the invention achieves an effect remarkably different from the conventional technologies.

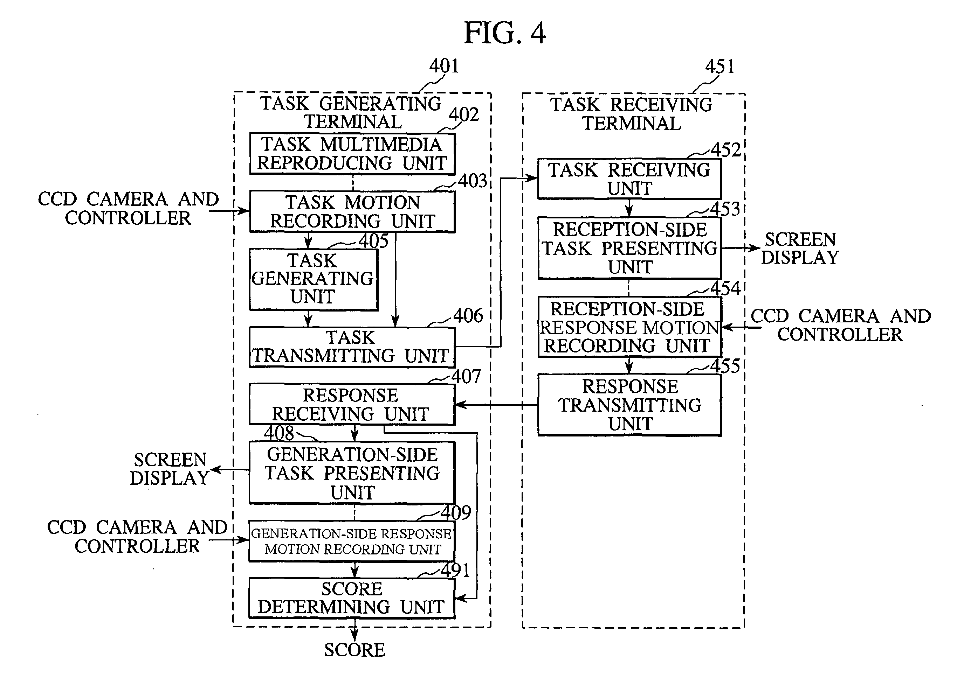

FIG. 4 is a schematic diagram showing the structure of the game system of the embodiment in detail. Hereafter, an explanation will be given with reference to this figure.

In the game system 201, either one of the two game terminal devices 202 functions as a task generating terminal 401, and the other one functions as a task receiving terminal 451.

The task generating terminal 401 has a task multimedia reproducing unit 402, a task motion recording unit 403, a task generating unit 405, a task transmitting unit 406, a response receiving unit 407, a generation-side task presenting unit 408, and a generation-side response operation recording unit 409.

The task receiving terminal 451 has a task receiving unit 452, a reception-side task presenting unit 453, a reception-side response operation recording unit 454, and a response transmitting unit 455.

Further, either one of the task generating terminal 401 and the task receiving terminal 451 has a score determining unit 491. In the figure, the task generating terminal 401 has the score determining unit 491.

In the task generating terminal 401, first, the task multimedia reproducing unit 402 reproduces task multimedia information.

As explained above, the task multimedia information corresponds to a music/musical composition in a conventional dance game, and in the present game system 201, players of both game terminal devices 202 are required to dance and perform input operations to the rhythm of the music.

Accordingly, under the control of the CPU 101, the sound processor 110 reproduces music composition information recorded in a DVD-ROM or the like, and functions as the task multimedia reproducing unit 402.

On the other hand, the task motion recording unit 403 records motion information of the player (hereinafter, "task motion information") while the task multimedia information is being reproduced.

In this embodiment, let us suppose that the motion information of a player includes the following information:
(a) information in which how a player dances is captured and recorded by a CCD camera. The motion information is temporarily saved in the RAM 103 or the hard disk drive from the CCD camera through the interface 104.
(b) operation input information which indicates steps of a player in chronological order. This can be acquired by monitoring how the step-on type board controller is stepped on from the CPU 101 through the interface 104.

However, in some dance games, motions of a hand are detected by a CCD camera to determine whether or not a player dances with a correct choreography, and in this case, it is sufficient to merely record motion information which picks up the dance of the player.

Accordingly, under the control of the CPU 101, the CCD camera and the step-on type board controller work together with the RAM 103 and the hard disk drive, and function as the task motion recording unit 403.

Further, the task generating unit 405 generates a motion task that a player must execute from recorded task motion information.

According to the conventional dance games, it is common that a provider of a game system prepares a position of a step in a dance as a motion task, but according to the present invention, a motion task is newly generated based on the task motion information when a player dances.

According to the embodiment, a state that the controller is stepped on at a predetermined interval to the rhythm of the task multimedia information reproduced as a BGM is extracted, and a motion task is generated in such a way that a step at the extraction timing matches a step of the player.

The extraction timing may have an equal interval with a tempo of the task multimedia information, and in a case where the task multimedia information is defined by the MIDI sequence or the like, a command indicating a task extracting timing may be included as a user-defined extended command, and a timing which matches that command may be the extraction timing.

Accordingly, the CPU 101 works together with a recording medium like the RAM 103 which stores the motion information, and functions as the task generating unit 405.

The task transmitting unit 406 transmits the recorded task motion information and the generated motion task to the task receiving terminal 451 via the Internet 203. Accordingly, under the control of the CPU 101, the NIC 109 functions as the task transmitting unit 406.
In the embodiment, motion picture information for how a player of the task generating terminal 401 dances alone and a motion task generated by that dance are transmitted to the task receiving terminal 451, and a player of the task receiving terminal 451 is required to accomplish the motion task. Later, the player of the task generating terminal 401 himself/herself is required to accomplish the motion task, so that generation of an appropriate task and fairness are secured.

It is desirable that a recording process by the task motion recording unit 403, a motion task generation process by the task generating unit 405, and a transmission process by the task transmitting unit 406 should be concurrently processed in a pipeline manner. It is general that a streaming process is executed when motion information is transmitted. By executing such pipeline parallel process and streaming transmission, motion information is not stored in entirety, but stored in a buffer having a predetermined size and deleted arbitrarily, thereby saving a memory area. It is desirable that such parallel process and streaming process should be employed by individual units to be discussed later.

In the task receiving terminal 451, the task receiving unit 452 receives task motion information and a motion task both transmitted from the task generating terminal 401 through the computer communication network. Accordingly, under the control of the CPU 101, the NIC 109 functions as the task receiving unit 452.

As explained above, in the case of a communication type match-up dance game, a motion task generated by the task generating terminal 401 and motion picture information representing how the player of the task generating terminal 401 dances are received. In the case of the game system according to this embodiment, the motion task corresponds to steps taken by the opponent player at a predetermined timing.

On the other hand, the reception-side task presenting unit 453 reproduces the task multimedia information, and presents the received task motion information and motion task in synchronization with the reproduction.

In this embodiment, the same music as that of the opponent player is output, and the motion picture representing how the opponent player dances is reproduced together with the music, and the motion task indicating what steps should be taken at what timing is displayed on a screen together with the BGM. The motion task is generated based on how the opponent player dances.

Accordingly, under the control of the CPU 101, the image processor 107 and the sound processor 110 function as the reception-side task presenting unit 453.

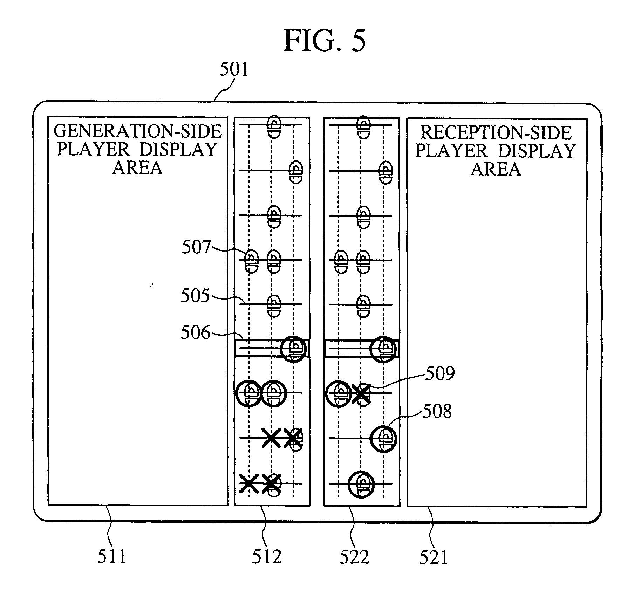

FIG. 5 is an explanatory diagram showing how a screen is displayed on a task generating terminal and a task receiving terminal according to this embodiment. Hereinafter, an explanation will be given with reference to this figure.

A screen 501 is divided into four areas: a generation-side player display area 511; a generation-side task display area 512; a reception-side player display area 521; and a reception side task display area 522.

The generation-side player display area 511 of the screen 501 displays a motion picture showing how the image of the player of the task generating terminal 401 is captured, and the task generation-side player display area 521 displays a motion picture showing how the image of the player of the task receiving terminal 451 is captured.

Motion picture information reproduced in those areas in synchronization with a BGM is one that an image picked up by the CCD camera of the game terminal device 202 is directly superimposed and motion picture information included in motion information transmitted from the partner game terminal device 202.

In a case where a task is first generated by the task generating terminal 401, no information to be displayed on the reception-side player display area 521 and reception-side task display area 522 is present. Therefore, any information (e.g., a motion picture prepared in advance by the provider of the game system and representing a choreography, and a motion task at that time) may be appropriately reproduced, or no information may be displayed.

In the generation-side task display area 512 and the reception-side task display area 522 of the screen 501, horizontal lines 505 which represent rhythms synchronized with the BGM are scrolled from top down.

At a timing at which a horizontal line 505 reaches an aiming bar 506, positions (three positions: right side; left side; and center) in the step-on type board controllers actually stepped on by individual players are represented by footstep marks 507, and after that, footstep marks 507 are moved and scrolled downwardly together with the horizontal lines 505. The footstep mark 507 corresponds to a motion task generated when a task is generated.

Moreover, when a task is generated, the footstep mark 507 is displayed with the aiming bar 506 to set a motion task, so that any mark other than the horizontal lines 505 is not displayed above the aiming bar 506.

On the other hand, when a task generated by an opponent is attempted to be accomplished, and when a task generated by the player himself/herself is attempted to be accomplished, the generation-side task display area 512 and the reception-side task display area 522 display footstep marks 507 in accordance with a task and horizontal lines 505 are displayed above the aiming bar 506, and those scroll from top down.

At a timing at which a footstep mark 507 reaches the aiming bar 506, if a position where the footstep mark 507 is displayed (e.g., three positions: right side; left side; and center) is correctly stepped on, a circle mark 508 is added to the footstep mark 507, and if failed, a cross mark 509 is added to a corresponding position. Circle marks 508 and cross marks 509 scroll downwardly at the same speed as that of the horizontal lines 505.

If the number of the circle marks 508 is large, this means correct steps are taken, and the score becomes good. In contrast, if the number of the cross marks 509 is large, this means that steps are incorrect, so that the score becomes bad.

As explained above, the player of the task receiving terminal 451 can dance to the music and the motion task while watching how the player of the task generating terminal 401 dances to the music.

The reception-side response motion recording unit 454 records motion information (hereinafter, "reception-side response motion information") of the player during a period that the motion task is presented.
As the way the player of the task generating terminal 401 dances is recorded, the way the player of the task receiving terminal 451 dances is also recorded. Thus, the symmetrical property of the game is achieved.

The response transmitting unit 455 transmits the recorded reception-side response motion information via the computer communication network. Accordingly, under the control of the CPU 101, the NIC 109 functions as the response transmitting unit 455.
Because the player of the task receiving terminal 451 can dance to accomplish the motion task while watching how the opponent player dances, reception-side response motion information is transmitted to the task generating terminal 401 to provide the likelihood information to the player of the task generating terminal 401.

If the reception-side response motion information includes the time-series of positions of the step-on type board controller stepped on by the player of the task receiving terminal 451 when the horizontal lines 505 reach the aiming bar 506, the task generating terminal 401 can display how both players attempt to accomplish the task in a comparative manner on the generation-side task display area 512 and the reception-side task display area 522.

For the same reason as explained above, it is desirable that reception by the task receiving unit 452, presentation by the reception-side task presenting unit 453, recording by the reception-side response motion recording unit 454, and transmission by the response transmitting unit 455 should be carried out through a pipeline parallel process.

On the other hand, in the task generating terminal 401, the response receiving unit 407 receives reception-side response motion information transmitted from the task receiving terminal 451 via the computer communication network.
This is a similar process to that of the task receiving terminal 451, but a motion task generated by the task generating terminal 401 is used, so that in the case of the foregoing dance game, motion picture information representing the way the player of the task receiving terminal 451 dances is received.

Thereafter, the generation-side task presenting unit 408 reproduces task multimedia information, and presents the received reception-side response motion information and the generated motion task in synchronization with the reproduction.

Accordingly, the CPU 101 works together with the image processor 107 and the sound processor 110, and functions as the generation-side task presenting unit 408.

The player of the task generating terminal 401 performs dance steps and dances while watching how the opponent player dances with a BGM which is the same music that the player of the task generating terminal 401 has danced before, and at this time, as shown in FIG. 5, the steps of the previous dance of the player of the task generating terminal 401 are presented as a motion task.

That is, the player is required to dance with the same choreography as that of his/her own previous dance as far as possible. Accordingly, it is possible to prevent any cheating such as dancing with a chaotic choreography just to embarrass the opponent player, and the purpose of the game becomes to dance the same dance accurately as far as possible. This strongly motivates the players.

The generation-side response motion recording unit 409 records motion information (hereinafter, "generation-side response motion information") of the player during a period that the motion task is being presented.

In this embodiment, the time-series of positions of the step-on type board controller stepped on by the player of the task generating terminal 401 at a timing at which the horizontal lines 505 reach the aiming bar 506 is recorded as generation-side response motion information.

Accordingly, under the control of the CPU 101, the step-on type board controller and the recording medium like the RAM 103 work together, and function as the generation-side response motion recording unit 409.

Here, for the same reason as explained above, it is desirable that reception by the response receiving unit 407, presentation by the generation-side task presenting unit 408, and recording by the generation-side response motion recording unit 409 should be carried out through a pipeline parallel process.

In either one of the task generating terminal 401 and the task receiving terminal 451, the score determining unit 491 compares the generated motion task with the recorded generation-side response motion information and with the received reception-side response motion information, and determines the scores of the player of the task generating terminal 401 and the player of the task receiving terminal 451, respectively.

In FIG. 4, the task generating terminal 401 has the score determining unit 491, but the task receiving terminal 451 may have the score determining unit 491, and both terminals may individually have the score determining unit 491.

The generated motion task is shared by both game terminal devices. Accordingly, if information indicating steps of the generation-side response motion information in chronological order and information indicating steps of the reception-side response motion information in chronological order are transmitted to the opponent terminal in accordance with necessity, either one of the game terminal devices 202 or both game terminal devices 202 can determine the scores.

For example, both game terminal devices 202 may determine the individual scores at the same time, and may exchange the results thereof, or either one of the game terminal devices may determine the score, and may transmit the determination result to the opponent terminal device.

As explained above, when a player steps on a position indicated by a footstep mark 507 as a task which scrolls down with the horizontal line 505 at a timing at which the footstep mark 507 reaches the aiming bar 506, this is evaluated as a correct motion (circle mark 508), and if not, this is evaluated as a failure (cross mark 509), so that the score can be determined based on the numbers thereof.

According to this embodiment, in a communication type match-up game, individual players can make a movement while watching how the opponent player moves and in synchronization with the movement of the opponent player, so that it is possible to provide a game system which allows the players not to feel a communication delay, and to feel as if both players are really having a match-up at the same place.

This is because, as explained above, in the case of a dance game, the way how a player dances is recorded and transmitted to the opponent terminal in a streaming manner, and in parallel, what steps are taken is detected at a predetermined timing, and a task is generated and transmitted to the opponent terminal in a streaming manner.

According to this embodiment, recording of the motion information of the player, generation of a task, and transmission of various items of information are carried out through a pipeline process, so that both game terminal devices can allow the respective players to play a game with a waiting time which is as short as possible.

As explained above, the first game terminal device and the second game terminal device are structured in such a manner as to alternately play roles as the task generating terminal 401 and the task receiving terminal 451, so that the symmetrical property of both players can be maintained by alternately carrying out the two modes, and the fairness of the game is ensured. Accordingly, it is possible to provide a communication type match-up game system which allows the players of two game terminal devices to present a task and compete the accomplishment thereof with each other, to thereby ensure fairness and give a feeling of tension in the game.

Further, according to this embodiment, in a case where a dance game is realized, how steps are taken can be acquired through an exclusive controller, and in this case, the conventional controller for conventional dance games can be reused. Accordingly, it is possible to provide a new communication type match-up game system while making effective use of the conventional hardware resources.

As explained above, according to these embodiments, a situation corresponding to a situation where a dance game match-up machine in a gaming arcade is used can be displayed on a screen as a motion picture, so that it is possible to provide a communication type match-up scene to a player, and this makes the scene alive.

The present application claims the benefit of a priority based on Japanese Patent Application No. 2006-085024, the contents of which are incorporated by reference if the domestic laws and ordinances of designated countries permit.

### Industrial Applicability

As explained above, according to the present invention, it is possible to provide a game system and a game control method which are suitable for allowing a player to feel as little communication delay as possible in a communication type match-up game where a winner is determined based on motion information of the player, a computer-readable information recording medium recording a program which realizes those system and method with a computer, and the program.

## Claims

1. A game system (201) comprising a first game terminal device (202) and a second game terminal device (202) both connected together over a computer communication network, either one of the first and second game terminal devices functioning as a task generating terminal (401) while the other game terminal device functioning as a task receiving terminal (451), wherein each of the first game terminal device (202) and the second game terminal device (202) comprises:
(a) when the game terminal device is the task generating terminal (401),
a task multimedia reproducing unit (402) which reproduces task multimedia information;
a task motion recording unit (403) which records motion information (hereinafter, "task motion information") of a player during a period that the task multimedia information is being reproduced;
a task generating unit (405) which generates a motion task that a player should accomplish from the recorded task motion information; and
a task transmitting unit (406) which transmits the recorded task motion information and the generated motion task to the task receiving terminal (451) via the computer communication network, and
(b) when the game terminal device is the task receiving terminal (451),
a task receiving unit (452) which receives the task motion information and the motion task both transmitted from the task generating terminal (401) via the computer communication network;
a reception-side task presenting unit (453) which reproduces the task multimedia information, and presents the received task motion information and motion task in synchronization with the reproduction;
a reception-side response motion recording unit (454) which records motion information (hereinafter, "reception-side response motion information") of a player during a period that the motion task is being presented; and
a response transmitting unit (455) which transmits the recorded reception-side response motion information via the computer communication network, and
(c) when the game terminal device is the task generating terminal (401),
a response receiving unit (407) which receives the reception-side response motion information transmitted from the task receiving terminal (451) via the computer communication network;
a generation-side task presenting unit (408) which reproduces the task multimedia information, and presents the received reception-side response motion information and the generated motion task in synchronization with the reproduction; and
a generation-side response motion recording unit (409) which records motion information (hereinafter, "generation-side response motion information") of a player during a period that the motion task is being presented, and
(d) wherein either one of the first game terminal device (202) and the second game terminal device (202) further comprises a score determining unit (491) which compares the generated motion task with the recorded generation-side response motion information and with the received reception-side response motion information, and determines the score of the player of the task generating terminal (401) and that of the player of the task receiving terminal (451).

2. The game system (201) according to claim 1, wherein
every time the task motion recording unit (403) records the task motion information, the task generating unit (405) generates a motion task based on the recorded task motion information,
every time the motion task is generated, transmission by the task transmitting unit (406) is carried out,
the task motion information and the motion task both received by the task receiving unit (452) are subjected to buffering, and after the amount of buffering exceeds a predetermined amount, presentation by the reception-side task presenting unit (453) is started, and every time the reception-side response motion recording unit (454) records the reception-side response motion information, transmission by the response transmitting unit (455) is carried out, and
the reception-side response motion information received by the response receiving unit (407) is subjected to buffering, and after the amount of buffering exceeds a predetermined amount, presentation by the generation-side task presenting unit (408) is started.

3. The game system (201) according to claim 1, wherein the first game terminal device (202) and the second game terminal device (202) alternately repeat a mode where the first game terminal device (202) functions as the task generating terminal (401) and the second game terminal device (202) functions as the task receiving terminal (451) and a mode where the first game terminal device (202) functions as the task receiving terminal (451) and the second game terminal device (202) functions as the task generating terminal (401) by a predetermined number of times, and determine which one of the player of the first game terminal device (202) and the player of the second game terminal device (202) is a winner.

4. The game system (201) according to claim 1, wherein
the task multimedia information is sound information,
motion information of the players recorded by the first game terminal device (202) and the second game terminal device (202) includes a motion picture information which captures an image of the player and operation information of a controller by that player,
the task generating unit (405) sets operation information of the controller by the player at a timing allocated to the sound information as a motion task,
the reception-side task presenting unit (453) reproduces the motion picture information included in the task motion information in synchronization with the task multimedia information,
the generation-side task presenting unit (408) reproduces the motion picture information included in the reception-side response motion information in synchronization with the task multimedia information, and
the score determining unit (491) determines a score based on a level of how much operation information of the controller included in the generation-side response motion information and operation information of the controller included in the reception-side response motion information match the motion task.

5. A game control method executed by a task generating terminal (401) and a task receiving terminal (451) both connected together over a computer communication network, the method comprising:
(a) for the task generating terminal (401),
a task multimedia reproducing step of reproducing task multimedia information;
a task motion recording step of recording motion information (hereinafter, "task motion information") of a player during a period that the task multimedia information is being reproduced;
a task generating step of generating a motion task that a player should accomplish from the recorded task motion information; and
a task transmitting step of transmitting the recorded task motion information and the generated motion task to the task receiving terminal (451) via the computer communication network, and
(b) for the task receiving terminal (451),
a task receiving step of receiving the task motion information and the motion task both transmitted from the task generating terminal (401) via the computer communication network;
a reception-side task presenting step of reproducing the task multimedia information, and presenting the received task motion information and motion task in synchronization with the reproduction;
a reception-side response motion recording step of recording motion information (hereinafter, "reception-side response motion information") of the player during the period that the motion task is being presented; and
a response transmitting step of transmitting the recorded reception-side response motion information via the computer communication network, and
(c) for the task generating terminal (401),
a response receiving step of receiving the reception-side response motion information transmitted from the task receiving terminal (451) via the computer communication network;
a generation-side task presenting step of reproducing the task multimedia information, and presenting the received reception-side response motion information and the generated motion task in synchronization with the reproduction; and
a generation-side response motion recording step of recording motion information (hereinafter, "generation-side response motion information") of the player during a period that the motion task is being presented, and
(d) for at least either one of the task generating terminal (401) and the task receiving terminal (451),
a score determining step of comparing the generated motion task with the recorded generation-side response motion information and with the received reception-side response motion information, and determining a score of the player of the task generating terminal (401) and a score of the player of the task receiving terminal (451).

6. A computer-readable information recording medium which stores a program allowing either one of a first computer and a second computer, both connected together over a computer communication network, to function as a task generating terminal (401) and allowing the other computer to function as a task receiving terminal (451), wherein
(a) when the computer functions as the task generating terminal (401), the program allows the computer to function as:
a task multimedia reproducing unit (402) which reproduces task multimedia information;
a task motion recording unit (403) which records motion information (hereinafter, "task motion information") of a player during a period that the task multimedia is being reproduced;
a task generating unit (405) which generates a motion task that a player should accomplish from the recorded task motion information; and
a task transmitting unit (406) which transmits the recorded task motion information and the generated motion task to the task receiving terminal (451) via the computer communication network, and
(b) when the computer functions as the task receiving terminal (451), the program allows the computer to function as:
a task receiving unit (452) which receives task motion information and a motion task both transmitted from the task generating terminal (401) via the computer communication network;
a reception-side task presenting unit (453) which reproduces the task multimedia information, and presents the received task motion information and motion task in synchronization with the reproduction;
a reception-side response motion recording unit (454) which records motion information (hereinafter, "reception-side response motion information") of a player during a period that the motion task is being presented; and
a response transmitting unit (455) which transmits the recorded reception-side response motion information via the computer communication network, and
(c) when the computer functions as the task generating terminal (401), the program allows the computer to function as:
a response receiving unit (407) which receives the reception-side response motion information transmitted from the task receiving terminal (451) via the computer communication network;
a generation-side task presenting unit (408) which reproduces the task multimedia information, and presents the received reception-side response motion information and the generated motion task in synchronization with the reproduction; and
a generation-side response motion recording unit (409) which records motion information (hereinafter, "generation-side response motion information") of a player during a period that the motion task is being presented, and
(d) the program allows either one of the first computer and the second computer to function as:
a score determining unit (491) which compares the generated motion task with the recorded generation-side response motion information and with the received reception-side response motion information, and determines a score of the player of the task generating terminal (401) and a score of the player of the task receiving terminal (451).

7. A program allowing either one of a first computer and a second computer, both connected together over a computer communication network, to function as a task generating terminal (401) and allowing the other computer to function as a task receiving terminal (451), wherein
(a) when the computer functions as the task generating terminal (401), the program allows the computer to function as:
a task multimedia reproducing unit (402) which reproduces task multimedia information;
a task motion recording unit (403) which records motion information (hereinafter, "task motion information") of a player during a period that the task multimedia is being reproduced;
a task generating unit (405) which generates a motion task that a player should accomplish from the recorded task motion information; and
a task transmitting unit (406) which transmits the recorded task motion information and the generated motion task to the task receiving terminal (451) via the computer communication network, and
(b) when the computer functions as the task receiving terminal (451), the program allows the computer to function as:
a task receiving unit (452) which receives task motion information and a motion task both transmitted from the task generating terminal (401) via the computer communication network;
a reception-side task presenting unit (453) which reproduces the task multimedia information, and presents the received task motion information and motion task in synchronization with the reproduction;
a reception-side response motion recording unit (454) which records motion information (hereinafter, "reception-side response motion information") of a player during a period that the motion task is being presented; and
a response transmitting unit (455) which transmits the recorded reception-side motion information via the computer communication network, and
(c) when the computer functions as the task generating terminal (401), the program allows the computer to function as:
a response receiving unit (407) which receives the reception-side response motion information transmitted from the task receiving terminal (451) via the computer communication network;
a generation-side task presenting unit (408) which reproduces the task multimedia information, and presents the received reception-side response motion information and the generated motion task in synchronization with the reproduction; and
a generation-side response motion recording unit (409) which records motion information (hereinafter, "generation-side response motion information") of a player during a period that the motion task is being presented, and
(d) the program allows either one of the first computer and the second computer to function as:
a score determining unit (491) which compares the generated motion task with the recorded generation-side response motion information and with the received reception-side response motion information, and determines a score of the player of the task generating terminal (401) and a score of the player of the task receiving terminal (451).
